# EUROPÄISCHE PATENTSCHRIFT

(11) **EP 3 414 476 B1**
(45) Veröffentlichungstag und Bekanntmachung des Hinweises auf die Patenterteilung: **08.04.2020**
(21) Anmeldenummer: 17704468.2
(22) Anmeldetag: 10.02.2017
(51) Int. Cl.: F16K 1/44, F16K 11/10, F16K 27/02, F16K 31/00, G05D 23/02, F01P 7/16

(54) **VENTILEINRICHTUNG**
VALVE DEVICE
DISPOSITIF DE SOUPAPE

(30) Priorität: 10.02.2016 DE 102016202026
(43) Veröffentlichungstag der Anmeldung: 19.12.2018
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2017/053040
(87) Internationale Veröffentlichungsnummer: WO 2017/137582

(56) Entgegenhaltungen:
- WO-A1-03/071372
- DE-A1-102005 061 476
- DE-B3-102014 213 938
- US-A- 2 719 518
- US-A- 4 114 571
- US-A1- 2010 126 594

## Beschreibung

Die Erfindung betrifft eine Ventileinrichtung, insbesondere für ein Kühlwassersystem eines Kraftfahrzeugs, mit einem Gehäuse, das einen ersten Anschluss und einen zweiten Anschluss für einen ersten Flüssigkeitskreislauf und einen dritten Anschluss und einen vierten Anschluss für einen zweiten Flüssigkeitskreislauf aufweist, wobei der erste Anschluss mit dem zweiten Anschluss strömungstechnisch dauerhaft verbunden ist, und mit einer Ventileinheit, die ein beweglich gelagertes Ventilelement aufweist, dem ein thermisch aktivierbares Federelement zugeordnet ist, und das in einer ersten Endstellung eine Verbindung zwischen dem dritten Anschluss und dem vierten Anschluss freigibt und in einer zweiten Endstellung verschließt.

Ventileinrichtungen der eingangs genannten Art sind aus dem Stand der Technik bekannt. Moderne Kraftfahrzeuge weisen mehrteilige Kühlwassersysteme auf, die zwei oder mehr Kühlwasserkreisläufe umfassen, die zumindest teilweise unabhängig voneinander betreibbar sind. Dadurch wird beispielsweise erreicht, dass bei einem Kaltstart eines Verbrennungsmotors des Kraftfahrzeugs zunächst nur ein kleiner Kühlwasserkreislauf aktiviert wird, sodass ein schnelles Erreichen der Betriebstemperatur des Verbrennungsmotors gewährleistet ist. Erst zu einem späteren Zeitpunkt wird dann ein weiterer Kühlwasserkreislauf hinzugeschaltet, um beispielsweise eine Kühlung des Kühlwassers durchzuführen, sodass die Betriebstemperatur des Verbrennungsmotor einen kritischen Wert nicht überschreitet. Auch sind Systeme bekannt, bei welchen Kühlwasserkreisläufe miteinander verbunden werden, um eine vorteilhafte Durchmischung und Temperaturregelung der Temperatur des Kühlwassers zu erreichen.

So offenbart beispielsweise die Offenlegungsschrift DE 10 2013 225 098 A1 eine Ventileinrichtung für ein Kühlwassersystem, das zwei Kühlwasserkreisläufe aufweist. Die Ventileinrichtung weist dabei einen Verbindungskanal zwischen den beiden Kühlwasserkreisläufen auf, in welchem eine Ventileinheit angeordnet ist. Die Ventileinheit sperrt in einem ersten Betriebszustand einen der Kühlwasserkreisläufe und öffnet den Verbindungskanal, sodass Kühlwasser von dem einen Flüssigkeitskreislauf in den anderen Flüssigkeitskreislauf gelangt. In ihrem zweiten Betriebszustand versperrt die Ventileinrichtung den Verbindungskanal und gibt den einen Kühlwasserkreislauf wieder frei, sodass die beiden Kühlwasserkreisläufe unabhängig voneinander arbeiten. Dabei ist einem Ventilelement der Ventileinrichtung ein thermisch aktivierbares Stellorgan in Form einer Formgedächtnislegierung-Feder zugeordnet, welche das Ventilelement in den zweiten Betriebszustand drängt, wenn es seine Aktivierungstemperatur erreicht hat.

Aus der Offenlegungsschrift US 4,114,571 A ist eine Ventileinrichtung für die Steuerung einer Ölkühlung einer Verbrennungskraftmaschine bekannt, welche zwei koaxial zueinander angeordnete Ventilelemente aufweist, von denen eines durch mehrere Bimetallscheiben an dem anderen verschiebbar gelagert ist. Aus der Offenlegungsschrift WO 03/071372 A1 ist eine weitere Ventileinrichtung bekannt, bei welcher in einer dauerhaft durchströmbaren Kammer ein temperatursensitiver Aktuator angeordnet ist. Aus der Offenlegungsschrift DE 10 2014 213 938 B3 ist außerdem eine Ventilanordnung mit einer von einem Druckmedium anströmbaren Druckseite und mit einem zwischen einer Schließstellung und einer Öffnungsstellung verlagerbaren Ventilkörper bekannt.

Der Erfindung liegt die Aufgabe zugrunde, eine Ventileinrichtung zu schaffen, die einfach und kostengünstig realisierbar ist und ein verbessertes Flüssigkeitsmanagement erlaubt.

Die der Erfindung zugrundeliegende Aufgabe wird insbesondere durch die Ventileinrichtung mit den Merkmalen des Anspruchs 1 gelöst. Diese weist den Vorteil auf, dass der erste Flüssigkeitskreislauf von dem zweiten Flüssigkeitskreislauf dauerhaft getrennt ist, und dass bei thermischer Aktivierung des Federelements die Verbindung zwischen dem dritten Anschluss und dem vierten Anschluss getrennt wird, ohne dass eine Verbindung zu dem ersten Flüssigkeitskreis hergestellt wird. Erfindungsgemäß ist hierzu vorgesehen, dass das thermisch aktivierbare Federelement in einer zwischen dem ersten Anschluss und dem zweiten Anschluss geschalteten Kammer angeordnet ist, die dauerhaft von dem dritten und dem vierten Anschluss getrennt ist und das Ventilelement in Richtung der zweiten Endstellung vorspannt. Hierdurch wird erreicht, dass der erste Flüssigkeitskreislauf von dem zweiten Flüssigkeitskreislauf auch weiterhin unabhängig betrieben wird beziehungsweise werden kann. Lediglich die in ihm enthaltene thermische Energie dient zur Aktuierung beziehungsweise Schaltung der Ventileinheit, um den zweiten Flüssigkeitskreislauf zu beeinflussen. Nimmt die Temperatur in der Kammer, also die Temperatur der von dem ersten Anschluss zu dem zweiten Anschluss oder andersherum fließenden Flüssigkeit derart zu, dass sie die Aktivierungstemperatur überschreitet, so wird das thermisch aktivierbare Federelement aktiviert und beaufschlagt das Ventilelement mit einer Federkraft beziehungsweise Druckkraft in Richtung der zweiten Endstellung, sodass der dritte Anschluss von dem vierten Anschluss getrennt wird und der zweite Flüssigkeitskreislauf gesperrt wird. Nimmt die Temperatur in dem ersten Flüssigkeitskreislauf ab, sodass sie unter eine Deaktivierungstemperatur fällt, so wird das thermisch aktivierbare Federelement wieder deaktiviert, sodass der zweite Kühlwasserkreislauf beziehungsweise Flüssigkeitskreislauf wieder freigegeben werden kann.

Gemäß einer bevorzugten Weiterbildung der Erfindung ist vorgesehen, dass dem thermisch aktivierbaren Federelement eine Rückstellfeder an dem Ventilelement entgegenwirkt. Die Rückstellfeder drängt somit das Ventilelement entgegen der Kraft des thermisch aktivierbaren Federelements in die erste Endstellung, in welcher der zweite Flüssigkeitskreislauf freigegeben ist. Dadurch erfolgt ein vollautomatisiertes Schalten der Ventileinrichtung in Abhängigkeit der Temperatur der Flüssigkeit, die von dem ersten Anschluss zu dem zweiten Anschluss oder andersherum strömt.

Weiterhin ist erfindungsgemäß vorgesehen, dass die Ventileinheit als Einschubmodul ausgebildet ist. Die Ventileinheit ist also derart ausgebildet, dass sie als Modul in das Gehäuse der Ventileinrichtung einschiebbar, insbesondere axial einschiebbar ist. Hierdurch ergibt sich eine besonders einfache Montage der Ventileinrichtung, die gegebenenfalls auch eine Anpassung der Ventileinrichtung an unterschiedliche Randbedingungen durch unterschiedlich gestaltete beziehungsweise dimensionierte Einschubmodule ermöglicht.

Erfindungsgemäß ist vorgesehen, dass die Ventileinheit ein zylinderförmiges Modulgehäuse aufweist, das einendig einen die Kammer begrenzenden Boden mit einer Öffnung aufweist, wobei das Ventilelement in dem Modulgehäuse verschiebbar gelagert ist und mit einem freien Ende radial dichtend/dicht durch die Öffnung geführt ist. Das zylinderförmige Modulgehäuse ist insbesondere axial in das Gehäuse einschiebbar, wozu das Gehäuse zweckmäßigerweise eine zylinderförmige Aufnahme für die Ventileinheit aufweist. In die Aufnahme münden dabei insbesondere der erste und der zweite Anschluss, optional auch der dritte und der vierte Anschluss. Die Kammer, in welcher das thermisch aktivierbare Federelement angeordnet ist, wird einseitig durch den Boden des Modulgehäuses begrenzt, wobei durch diesen Boden auch das Ventilelement hindurchgeführt ist, sodass es mit einem freien Ende außerhalb der Kammer beziehungsweise außerhalb des Modulgehäuses liegt, um dort die Verbindung zwischen dem dritten und dem vierten Anschluss freizugeben oder zu trennen. Dadurch, dass das Ventilelement radial dichtend/dicht durch die Öffnung geführt ist, sind die beiden Flüssigkeitskreisläufe sicher und dauerhaft voneinander getrennt. Außerdem bildet die Öffnung somit eine Schiebelagerung für das Ventilelement. Dadurch, dass das Ventilelement durch den Boden geführt ist, erstreckt es sich insbesondere ebenfalls axial beziehungsweise koaxial zu dem Modulgehäuse, wodurch ein einfaches Einschieben der Ventileinheit in das Gehäuse gewährleistet ist. Die Ventileinheit ist damit außerhalb des Gehäuses vormontierbar, wodurch sich die Gesamtmontage vereinfacht. Eine zweite Schiebelagerung für das Ventilelement ist bevorzugt durch einen Deckel gebildet, der die Kammer anderendig verschließt und dazu insbesondere stirnseitig mit dem Modulgehäuse und/oder dem Gehäuse formschlüssig verbunden, insbesondere verschweißt ist.

Gemäß einer bevorzugten Weiterbildung der Erfindung ist vorgesehen, dass das Ventilelement an seinem freien Ende einen Dichtkörper trägt, er dazu ausgebildet, in der zweiten Endstellung mit einem Ventilsitz des Gehäuses zusammenzuwirken, sodass die Verbindung zwischen dem dritten Anschluss und dem vierten Anschluss getrennt ist. Der Dichtkörper liegt somit, wie bereits erwähnt, außerhalb des Modulgehäuses in dem Gehäuse, also in einem Bereich, der nur von der Flüssigkeit des zweiten Flüssigkeitskreislaufs durchströmt ist. Das Gehäuse weist dabei einen Ventilsitz auf, der vorteilhaft mit dem Dichtkörper zusammenwirkt, um das Trennen der Verbindung zwischen dem dritten und dem vierten Anschluss sicher zu gewährleisten. Bevorzugt ist der Dichtkörper als elastisch verformbarer Dichtkörper, insbesondere als Elastomerkörper ausgebildet, wobei der Dichtkörper und der Ventilsitz vorzugsweise miteinander korrespondierende Konturen aufweist, um einen besonders guten und dichten Sitz des Dichtkörpers in/an dem Ventilsitz zu gewährleisten. Dabei ist bevorzugt vorgesehen, dass der Dichtkörper wenigstens abschnittsweise konisch ausgebildet ist, und in diesem Abschnitt mit dem ebenfalls konisch ausgebildeten Ventilsitz zusammenwirkt.

Gemäß einer bevorzugten Weiterbildung der Erfindung ist weiterhin vorgesehen, dass das Ventilelement einen Radialvorsprung im Bereich der Kammer aufweist, und dass die Federelemente sich an dem Radialvorsprung axial abstützen. Die Rückstellfeder und das thermisch aktivierbare Federelement sind somit beide im Bereich der Kammer angeordnet und wirken mit dem Ventilelement über den Radialvorsprung zusammen. Der Radialvorsprung ist somit letztendlich zwischen den beiden Federelementen angeordnet, sodass die Kraft zum Verschieben des Ventilelements in die eine oder in die andere Richtung an dem Radialvorsprung in das Ventilelement eingeleitet wird.

Bevorzugt ist vorgesehen, dass der Radialvorsprung von einer auf das Ventilelement aufgeschobenen Stützhülse gebildet ist, die form- und/oder kraftschlüssig axial auf dem Ventilelement gehalten ist. Das Ventilelement weist somit eine Stützhülse auf, die form- und/oder kraftschlüssig axial an dem Ventilelement gehalten beziehungsweise arretiert ist, um die von den Federelementen eingeleiteten Kräfte auf das Ventilelement zu übertragen. Durch die zweiteilige Ausbildung wird ein einfacher und kostengünstiger Aufbau ermöglicht, wobei die Montage der Stützhülse auf dem Ventilelement problemlos durchführbar ist. Gemäß einer alternativen Ausführungsform, die gegebenenfalls kostenintensiver, jedoch montagefreundlicher ist, ist der Radialvorsprung einstückig mit dem Ventilelement ausgebildet.

Weiterhin ist bevorzugt vorgesehen, dass die Stützhülse wenigstens einen radial nach innen vorstehenden Stützvorsprung aufweist, der in einer Radialvertiefung des Ventilelements eingreift. Durch den radial nach innen vorstehenden Stützvorsprung wird eine formschlüssige Verbindung zwischen Stützhülse und Ventilelement zur Verfügung gestellt. Die Stützhülse ist dabei insbesondere zumindest bereichsweise elastisch verformbar ausgebildet, um das Aufschieben und Einrasten des Stützvorsprungs in der Radialvertiefung zu gewährleisten. Auch ist es denkbar, den Innendurchmesser der Stützhülse durch Erwärmen der Stützhülse derart zu vergrößern, dass sie einfacher auf das Ventilelement aufschiebbar ist.

Gemäß einer bevorzugten Weiterbildung der Erfindung ist außerdem vorgesehen, dass der Kammer wenigstens zwei in einer Mantelwand des Modulgehäuses ausgebildete Öffnungen zugeordnet sind, wobei eine der Öffnungen dem ersten Anschluss und die andere der Öffnungen dem zweiten Anschluss zugeordnet/zuordenbar ist. Durch die Öffnungen wird der Zu- und Ablauf der Flüssigkeit aus dem ersten Flüssigkeitskreislauf zu der Kammer auf einfache Art und Weise gewährleistet. Zweckmäßigerweise sind die Öffnungen derart in der Mantelwand angeordnet, dass sie beim in das Gehäuse eingesteckten Zustand des Modulgehäuses fluidtechnisch mit dem ersten beziehungsweise dem zweiten Anschluss verbunden sind.

Um eine einfache Montage zu gewährleisten und den Betrieb dauerhaft zu sichern, ist weiterhin bevorzugt vorgesehen, dass das Modulgehäuse und das Gehäuse wenigstens eine formschlüssige Verdrehsicherung aufweisen. Die Verdrehsicherung gewährleistet zum einen, dass beim Einstecken das Modulgehäuse und das Gehäuse derart zueinander ausgerichtet werden, dass die Öffnungen jeweils dem ersten beziehungsweise dem zweiten Anschluss zugeordnet sind, und dass sich diese Zuordnung im Betrieb der Ventileinrichtung auch nicht verändert. Besonders bevorzugt ist vorgesehen, dass dazu das Modulgehäuse und das Gehäuse jeweils eine von einem Kreis abweichende Außen- beziehungsweise Innenkontur aufweisen, die korrespondierend zueinander ausgebildet sind. Insbesondere ist vorgesehen, dass das Modulgehäuse eine Radialvertiefung oder einen Radialvorsprung aufweist, der mit einem damit korrespondierenden Radialvorsprung des Gehäuses beziehungsweise mit einer mit dem Vorsprung korrespondierenden Radialvertiefung des Gehäuses zumindest in Umfangsrichtung formschlüssig zusammenwirkt, um ein Verdrehen von Modulgehäuse zu Gehäuse zu verhindern.

Gemäß einer vorteilhaften Weiterbildung der Erfindung ist weiterhin vorgesehen, dass das Modulgehäuse wenigstens eine schlitzförmige Aussparung in seiner Mantelwand aufweist, und dass ein eine Führungsöffnung für das Ventilelement aufweisendes Halteelement durch die schlitzförmige Aussparung in das Modulgehäuse seitlich eingesteckt ist, sodass es insbesondere in der schlitzförmigen Aussparung axial formschlüssig gehalten und axial in dem Modulgehäuse arretiert ist. Durch das vorteilhafte Halteelement ist somit ein Stützvorsprung im Inneren des Modulgehäuses zur Verfügung gestellt, an welchem sich beispielsweise eines der Federelemente axial abstützen kann. Durch den modulartigen Aufbau der Ventileinrichtung ist das Halteelement bereits bei der Vormontage der Ventileinheit montierbar. Insgesamt ergibt sich dadurch eine einfache und kostengünstige Realisierung der Ventileinrichtung.

Insbesondere ist vorgesehen, dass sich an dem Halteelement die Rückstellfeder axial abstützt. Das Halteelement ist dabei auf der dem Boden zugewandten Seite der Kammer angeordnet, sodass es dem Radialvorsprung des Ventilelements gegenüberliegt. Damit ist die Rückstellfeder zwischen dem Halteelement und dem Radialvorsprung des Ventilelements vorgespannt anordenbar beziehungsweise angeordnet.

Weiterhin ist bevorzugt vorgesehen, dass zwischen dem Halteelement und dem Boden ein elastisch verformbares Dichtelement, insbesondere Dichtring, das radial dichtend/dicht an dem Ventilelement anliegt, insbesondere vorgespannt gehalten ist. Das Dichtelement gewährleistet, dass die Durchführung des Ventilelements durch den Boden flüssigkeitsdicht erfolgt, sodass die beiden Flüssigkeitskreisläufe sicher dauerhaft voneinander getrennt sind. Als Dichtelement, insbesondere als Dichtring, ist beispielsweise ein Dichtring mit einem X-förmigen Querschnitt vorhanden.

Weiterhin ist bevorzugt vorgesehen, dass in dem Gehäuse der dritte Anschluss in Bewegungsrichtung des Ventilelements liegt und der vierte Anschluss senkrecht dazu. Dabei ist insbesondere bevorzugt auch der Ventilsitz dem dritten Anschluss zugeordnet, sodass dann, wenn das Ventilelement in die zweite Endstellung bewegt wurde, das Dichtelement axial mit dem Ventilsitz zusammenwirkt und von dem thermisch aktivierbaren Federelement gegen den Ventilsitz gedrängt wird.

Das erfindungsgemäße Kühlwassersystem mit den Merkmalen des Anspruchs 13 zeichnet sich durch die erfindungsgemäße Ventileinrichtung aus. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand eines Ausführungsbeispiels näher erläutert werden. Dazu zeigen
- Figur 1: eine vorteilhafte Ventileinrichtung in einer Schnittdarstellung,
- Figur 2: eine Detailansicht der Ventileinrichtung in einer Schnittdarstellung,
- Figuren 3A und 3B: ein Detail der Ventileinrichtung in unterschiedlichen Ansichten,
- Figuren 4A bis 4C: ein weiteres Detail der Ventileinrichtung in unterschiedlichen Ansichten und
- Figur 5: eine weitere Detailansicht der Ventileinrichtung.

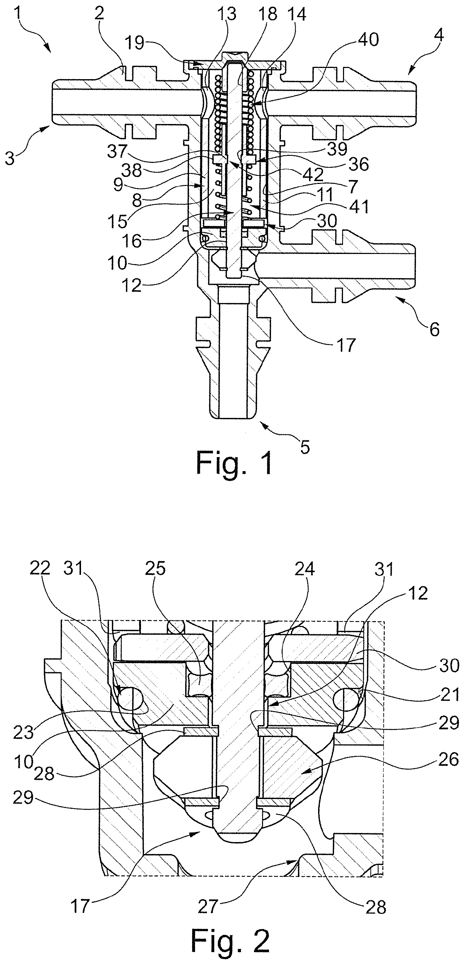

Figur 1 zeigt in einer Längsschnittdarstellung eine Ventileinrichtung 1 für ein Kühlwassersystem eines nicht näher dargestellten Kraftfahrzeugs. Die Ventileinrichtung 1 weist ein Gehäuse 2 auf, das fluidführend ausgebildet ist und dazu einen ersten Anschluss 3, einen zweiten Anschluss 4, einen dritten Anschluss 5 und einen vierten Anschluss 6 aufweist. Die Anschlüsse 3, 4, 5, 6 sind mit jeweils einer Fluidleitung des Kühlwassersystems verbindbar. Dabei ist das Kühlwassersystem beziehungsweise die Ventileinrichtung derart ausgebildet, dass die Anschlüsse 3 und 4 einem ersten Kühlwasserkreislauf, insbesondere Hochtemperaturkreislauf, des Kühlwassersystems und die Anschlüsse 5 und 6 einem zweiten Kühlwasserkreislauf, insbesondere Niedertemperaturkreislauf, des Kühlwassersystems angehören.

Die Anschlüsse 3, 4 liegen vorliegend an dem Gehäuse 2 einander fluchtend gegenüber und die Anschlüsse 5 und 6 sind derart rechtwinklig zueinander angeordnet, dass der Anschluss 6 sich parallel und beanstandet zu den Anschlüssen 3, 4 erstreckt, während der Anschluss 5 senkrecht dazu ausgerichtet ist.

Das Gehäuse 2 weist eine Aufnahme 7 auf, die zylinderförmig ausgebildet ist, wobei jeder der Anschlüsse 3, 4, 5, 6 in die Aufnahme 7 mündet, sodass durch die Aufnahme 7 alle Anschlüsse 3 bis 6 miteinander fluidtechnisch verbunden sind. Die Aufnahme 7 ist dabei axial randoffen zwischen den Anschlüssen 3 und 4 in dem Gehäuse 2 ausgebildet.

In die Aufnahme 7 ist eine Ventileinheit 8 eingesetzt, die als Einschubmodul ausgebildet und entsprechend axial in die Aufnahme 7 eingeschoben ist. Die Ventileinheit 8 weist ein becherförmiges Modulgehäuse 9 auf, das einen Boden 10 sowie eine von dem Boden 10 ausgehende Mantelwand 11 aufweist. Der Boden 10 und die Mantelwand 11 weisen dabei eine Außenkontur auf, die zumindest im Wesentlichen der Innenkontur der Aufnahme 7 entspricht, sodass die Ventileinheit 8 zumindest im Wesentlichen formschlüssig in der Aufnahme 7 beziehungsweise in dem Gehäuse 2 gehalten ist. In dem Boden 10 ist eine Öffnung 12 mittig ausgebildet und in der Mantelwand 11 zwei einander gegenüberliegende Öffnungen 13 und 14. Die Öffnungen 13 und 14 sind dabei jeweils einem der Anschlüsse 3 und 4 zugeordnet, um die in dem Modulgehäuse 9 liegende Kammer 15 fluidtechnisch mit dem ersten Hydraulikkreis beziehungsweise mit den Anschlüssen 3 und 4 zu verbinden. Beispielsweise von dem Anschluss 3 zu dem Anschluss 4 strömendes Fluid strömt somit auch durch den die Kammer 15 beziehungsweise den Innenraum des Modulgehäuses 9.

In dem Modulgehäuse 9 ist ein Ventilelement 16, das stabförmig ausgebildet ist, axial verschiebbar gelagert. Dabei ist das Ventilelement 16 mit einem freien Ende 17 durch die Öffnung 12 des Bodens 10 hindurchgeführt, sodass es auf der der Kammer 15 gegenüberliegenden Seite des Bodens 10 vorsteht. An seinem anderen Ende ist das Ventilelement 16 axial in einer Führungsaufnahme 18 eines Deckels 19 gehalten, welcher das Modulgehäuse 9 auf der dem Boden 10 abgewandten Seite verschließt, und welcher außerdem die Ventileinheit 8 an dem Gehäuse 2 befestigt. Dazu ist der Deckel 19 vorliegend an seinem Außenrand mit dem Gehäuse 2 verschweißt, auf welchem er axial aufliegt.

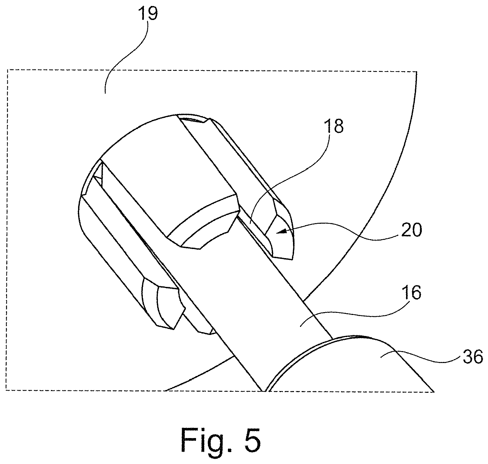

Figur 5 zeigt in einer vereinfachten perspektivischen Darstellung eine Detailansicht der Führungsaufnahme 18. Diese ist als Führungshülse 20 ausgebildet, die in Längsrichtung geschlitzt ausgebildet ist beziehungsweise in Umfangsrichtung gesehen unterbrochen. Das Ventilelement 16 ist axial in der Führungsaufhahme 18 verschiebbar gehalten.

Figur 2 zeigt eine vergrößerte Teilansicht der Ventileinrichtung 1 im Bereich des Bodens 10. Im Bereich des Bodens 10 weist das Modulgehäuse 9 eine Durchmesserverjüngung in Form einer Stufe 21 auf. An dieser Stufe 21 ist ein Dichtring 22 in einer Radialvertiefung 23 des Modulgehäuses 9 gehalten, sodass er radial zwischen dem Modulgehäuse 9 und der Innenseite des Gehäuses 2 der Aufnahme 7 vorgespannt ist.

Auf der der Kammer 15 zugewandten Seite des Bodens 10 weist der Boden 10 außerdem eine Axialvertiefung 24 auf, die koaxial zu der Öffnung 12 ausgebildet ist. In dieser Axialvertiefung 24 liegt ein Dichtelement 25 in Form eines Dichtrings mit einem X-förmigen Querschnitt ein. Der Dichtring liegt radial vorgespannt zwischen einer der Seiten der Mantelwand der Vertiefung 24 und der Mantelaußenwand des Ventilelements 16, sodass das Fluid des ersten Flüssigkeitskreislaufs nicht an dem Modulgehäuse 9 vorbei oder durch die Öffnung 12 hindurch zu dem zweiten Flüssigkeitskreislauf gelangen kann.

Wie in Figur 2 ersichtlich trägt das Ventilelement 16 an seinem freien Ende 17 außerdem einen Dichtkörper 26, das elastisch verformbar ausgebildet ist. Weil der Dichtkörper 26 an dem freien Ende 17 angeordnet ist, liegt er außerhalb des Modulgehäuses 9 in der Aufnahme 7, und zwar vorliegend in dem Bereich, in welchem die Anschlüsse 5 und 6 aufeinander treffen. Dem Anschluss 5 ist dabei ein Dichtsitz 27 zugeordnet. Das Dichtelement 26 und der Dichtsitz 27 sind dazu ausgebildet, derart zusammenzuwirken, dass dann, wenn das Ventilelement 16 in Richtung des Anschlusses 5 bewegt beziehungsweise verschoben wurde, das Dichtelement 26 dicht auf den Dichtsitz 27 gepresst ist, um die Fluidverbindung zwischen dem Anschluss 5 und dem Anschluss 6 zu trennen. Damit das Dichtelement 26 auf dem Ventilelement 16 axial festgehalten ist, liegt es zwischen zwei Sicherungsringen beziehungsweise Spannringen 28, die axial formschlüssig an dem Ventilelement 16 gehalten sind, indem sie in dort vorgesehene Ringnuten 29 eingreifen.

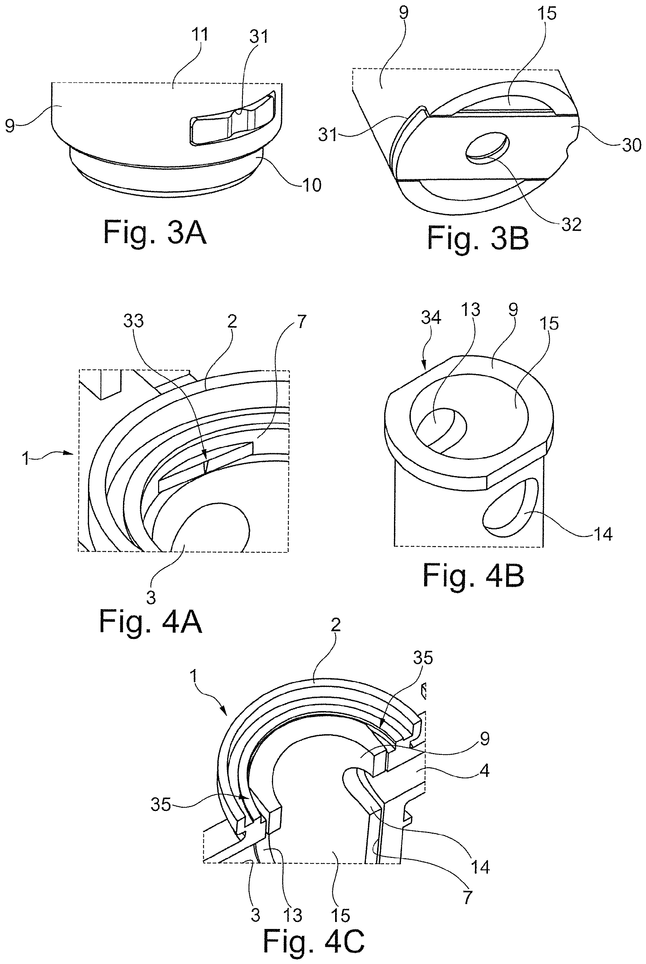

Um zu verhindern, dass sich die Dichtung zwischen dem Ventilelement 16 und dem Modulgehäuse 9, die durch das Dichtelement 25 gebildet wird, löst, ist ein Halteelement 30 vorhanden, das mit Bezug auf Figuren 3A und 3B näher erläutert werden soll.

Figuren 3A und 3B zeigen eine perspektivische Draufsicht auf das Modulgehäuse (Figur 3A) und eine perspektivische Schnittdarstellung desselben (Figur 3B). Das Halteelement 30 ist als Halteplatte ausgebildet, die an zwei gegenüberliegenden Enden eine Außenkontur aufweist, die der Außenkontur des Modulgehäuses 9 entspricht, sodass das Halteelement 30 radial bündig mit dem Modulgehäuse 9 abschließt. Das Modulgehäuse 9 weist zur Aufnahme des Halteelements zwei miteinander fluchtende schlitzförmige Aussparungen 31 auf, in welche das Halteelement 30 einschiebbar ist, wie in Figur 3B gezeigt. Mittig weist das Halteelement 30 eine Öffnung 32 auf, die einen Innendurchmesser aufweist, der größer ist als der Außendurchmesser des Ventilelements 16, sodass dieses durch die Öffnung 32 mit dem freien Ende 17 hindurchführbar ist, wie in Figur 2 gezeigt. Die schlitzförmigen Aussparungen 31 sind dabei in Nähe des Bodens 10 derart angeordnet, dass das Dichtelement 25 axial zwischen dem Boden 10 einerseits und dem Halteelement 30 andererseits gehalten ist. Dadurch wird sicher verhindert, dass sich die Dichtung zwischen dem Ventilelement 16 und dem Modulgehäuse 9 lösen kann.

Figuren 4A bis 4C zeigen in mehreren Darstellungen ein weiteres Detail der vorteilhaften Ventileinrichtung 1. Figur 4A zeigt dabei eine perspektivische Draufsicht auf die Aufnahme 7, Figur 4B eine perspektivische Draufsicht auf das Modulgehäuse 9 und Figur 4C eine perspektivische Draufsicht auf das in der Aufnahme 7 eingesetzte Modulgehäuse 9.

Die Aufnahme 7 weist gemäß Figur 4A wenigstens einen nach innen weisenden Radialvorsprung 33 auf, der komplementär zu einer Radialvertiefung 34 des Modulgehäuses 9 ausgebildet ist, wie in Figur 4B gezeigt. Vorliegend wird die Radialvertiefung 34 durch eine Abflachung der Mantelaußenwand des Modulgehäuses 9 gebildet. Die Aufnahme 7 des Gehäuses 2 weist einen dazu entsprechenden Vorsprung 33 auf. Vorliegend sind insbesondere zwei der Vertiefungen 34 und Vorsprünge 33 einander gegenüberliegend angeordnet, wie insbesondere aus Figuren 4B und 4C ersichtlich. Wie insbesondere aus Figur 4C ersichtlich bewirken der Vorsprung 33 und die jeweilige Vertiefung 34, dass das Modulgehäuse 9 die Aufnahme 7 mit jeweils eine von einem Kreis abweichende Kontur aufweisen, die eine Verdrehsicherung 35 zwischen Modulgehäuse 9 und Gehäuse 2 bildet. Durch diese Verdrehsicherung 35 wird gewährleistet, dass die Öffnungen 13, 14 stets den Anschlüssen 3, 4 zugeordnet sind und damit ein sicherer Betrieb der Ventileinrichtung 1 beziehungsweise des die Ventileinrichtung 1 aufweisenden Kühlwasserkreislaufs/Kühlwassersystems stets erhalten bleibt.

Wie aus Figur 1 weiterhin ersichtlich ist auf das Ventilelement 16 eine Ventilhülse 36 aufgeschoben. Die Ventilhülse 36 weist axial gesehen mittig einen Radialvorsprung 37 auf, der radial nach innen vorsteht, sowie ein Radialvorsprung 38, der radial nach außen vorsteht. Das Ventilelement 16 weist eine Ringnut 39 auf, welche eine Radialvertiefung 42 bildet, in welche der Radialvorsprung 37 eingreift, sodass die Ventilhülse 36 axial formschlüssig an dem Ventilelement 16 gehalten ist.

Der Radialvorsprung 38 dient als Stützvorsprung, der axiale Anlageflächen für zwei Federelemente 40 und 41 bildet. Die beiden Federelemente 40, 41 sind als Schraubenfedern ausgebildet und koaxial zu dem Ventilelement 16 angeordnet. Das Federelement 40 stützt sich dabei einendig an dem Deckel 19 und anderendig an dem Radialvorsprung 37 ab, und das Federelement 41 stützt sich einendig an dem Halteelement 30 und anderendig an den Radialvorsprung 37 ab. Während es sich bei dem Federelement 41 um eine einfache Schraubenfeder handelt, ist das Federelement 40 als thermisch aktivierbares Federelement ausgebildet, das aus einer Formgedächtnislegierung gefertigt ist. Hierdurch ergibt sich die im Folgenden beschriebene Funktion:

Solange das durch die Anschlüsse 3 und 4 geförderte Fluid eine kritische Temperatur beziehungsweise Aktivierungstemperatur nicht überschreitet, drängt das Federelement 41 das Ventilelement 16 in Richtung des Deckels 19, sodass das Dichtelement 26 entfernt von dem Ventilsitz 27 des Anschlusses 5 liegt. Steigt die Temperatur jedoch über den kritischen Grenzwert hinaus, so wird das thermisch aktivierbare Federelement 40 aktiviert, sodass die von ihm bereitgestellte Federkraft die Federkraft des Federelements 41 übersteigt. Dadurch wird das Ventilelement 16 in Richtung des Bodens 10 verlagert, sodass das Dichtelement 26 gegen den Ventilsitz 27 gepresst wird und dadurch die Verbindung zwischen dem Anschluss 5 und dem Anschluss 6 verschließt beziehungsweise trennt, sodass der zweite Flüssigkeitskreislauf unterbrochen beziehungsweise gestoppt ist. Aufgrund der vorteilhaften Dichtung durch die Dichtelemente 25 und 22 wird dabei gewährleistet, dass die zwischen den Anschlüssen 3 und 4 strömende Flüssigkeit auch weiterhin nur dem ersten Flüssigkeitskreislauf zugeführt wird, und nicht in den zweiten Flüssigkeitskreislauf gelangt. Sinkt die Temperatur der Flüssigkeit in dem ersten Flüssigkeitskreislauf unterhalb des oder eines weiteren Grenzwerts, so wird die Formgedächtnislegierung wieder deaktiviert, sodass das Federelement 40 durch die Federkraft des Federelements 41 gestaucht werden kann, wobei durch das Stauchen das Ventilelement 16 in Richtung des Deckels 19 verschoben und dadurch das Dichtelement 26 von dem Dichtsitz 27 entfernt wird, sodass der zweite Kühlkreislauf wieder freigegeben ist.

## Patentansprüche

1. Ventileinrichtung (1), mit einem Gehäuse (2), das einen ersten Anschluss (3) und einen zweiten Anschluss (4) für einen ersten Flüssigkeitskreislauf und einen dritten Anschluss (5) und einen vierten Anschluss (6) für einen zweiten Flüssigkeitskreislauf aufweist, wobei der erste Anschluss (3) mit dem zweiten Anschluss (4) strömungstechnisch dauerhaft verbunden ist, und mit einer Ventileinheit (8), die ein beweglich gelagertes Ventilelement (16) aufweist, dem ein thermisch aktivierbares Federelement (40) zugeordnet ist, und das in einer ersten Endstellung eine Verbindung zwischen dem dritten Anschluss (5) und dem vierten Anschluss (6) freigibt und in einer zweiten Endstellung verschließt, **dadurch gekennzeichnet, dass** das thermisch aktivierbare Federelement (40) in einer zwischen dem ersten Anschluss (3) und dem zweiten Anschluss (4) geschalteten Kammer (15) angeordnet ist, die dauerhaft von dem dritten und dem vierten Anschluss (5,6) getrennt ist und das Ventilelement (16) in Richtung der zweiten Endstellung vorspannt, und dass die Ventileinheit (8) als in das Gehäuse (7) einschiebbares Einschubmodul ausgebildet ist und ein zylinderförmiges Modulgehäuse (9) aufweist, das einendig einen die Kammer (15) begrenzenden Boden (10) mit einer Öffnung (12) aufweist, wobei das Ventilelement (16) in dem Modulgehäuse (9) verschiebbar gelagert ist und mit einem freien Ende (17) radial dichtend/dicht durch die Öffnung (12) geführt ist.

2. Ventileinrichtung nach Anspruch 1, **dadurch gekennzeichnet, dass** dem thermisch aktivierbaren Federelement (40) eine Rückstellfeder (41) an dem Ventilelement (16) entgegenwirkt.

3. Ventileinrichtung nach einem der vorhergehenden Ansprüche, **dadurch gekennzeichnet, dass** das Ventilelement (16) an seinem freien Ende (17) einen Dichtkörper (26) trägt, der dazu ausgebildet ist, in der zweiten Endstellung mit einem Ventilsitz (27) des Gehäuses (7) zusammenzuwirken, sodass die Verbindung getrennt ist.

4. Ventileinrichtung nach einem der vorhergehenden Ansprüche, **dadurch gekennzeichnet, dass** das Ventilelement (16) wenigstens einen Radialvorsprung (38) im Bereich der Kammer (15) aufweist, und dass die Federelemente (40,41) sich an dem Radialvorsprung (38) axial abstützen.

5. Ventileinrichtung nach einem der vorhergehenden Ansprüche, **dadurch gekennzeichnet, dass** der Kammer (15) wenigstes zwei in einer Mantelwand (11) des Modulgehäuses (9) ausgebildete Öffnungen (13,14) zugeordnet sind, wobei eine der Öffnungen (13) dem ersten Anschluss (3) und die andere der Öffnungen (14) dem zweiten Anschluss (4) zugeordnet/zuordenbar ist.

6. Ventileinrichtung nach einem der vorhergehenden Ansprüche, **dadurch gekennzeichnet, dass** das Modulgehäuse (9) und das Gehäuse (2) wenigstens eine formschlüssige Verdrehsicherung (35) aufweisen.

7. Ventileinrichtung nach Anspruch 4, **dadurch gekennzeichnet, dass** der Radialvorsprung (38) von einer auf das Ventilelement (16) aufgeschobenen Stützhülse (36) gebildet ist, die form- und/oder kraftschlüssig axial auf dem Ventilelement (16) gehalten ist.

8. Ventileinrichtung nach Anspruch 7, **dadurch gekennzeichnet, dass** die Stützhülse (36) wenigstens einen radial nach innen vorstehenden Stützvorsprung (37) aufweist, der in einer Radialvertiefung (39) des Ventilelements (16) eingreift.

9. Ventileinrichtung nach einem der vorhergehenden Ansprüche, **dadurch gekennzeichnet, dass** das Modulgehäuse (9) wenigstens eine schlitzförmige Aussparung (31) in seiner Mantelwand (11) aufweist, und dass ein eine Öffnung (32) aufweisendes Halteelement (30) durch die schlitzförmige Aussparung (31) in das Modulgehäuse (9) seitlich eingesteckt ist.

10. Ventileinrichtung nach den Ansprüchen 2 und 9, **dadurch gekennzeichnet, dass** sich an dem Halteelement (30) die Rückstellfeder (41) axial abstützt.

11. Ventileinrichtung nach einem der Ansprüche 9 und 10, **dadurch gekennzeichnet, dass** zwischen dem Halteelement (30) und dem Boden (10) ein elastisch verformbares Dichtelement (25), das radial dichtend/dicht an dem Ventilelement (16) anliegt, angeordnet ist.

12. Ventileinrichtung nach einem der vorhergehenden Ansprüche, **dadurch gekennzeichnet, dass** in dem Gehäuse (2) der dritte Anschluss (5) in Bewegungsrichtung des Ventilelements (16) liegt und der vierte Anschluss (6) senkrecht dazu.

13. Ventileinrichtung nach Anspruch 11, **dadurch gekennzeichnet, dass** das Dichtelement (25) ein Dichtring ist.

14. Ventileinrichtung nach einem der Ansprüche 11 bis 13, **dadurch gekennzeichnet, dass** das Dichtelement (25) an dem Ventilelement (16) vorgespannt gehalten ist.

15. Kühlwassersystem für ein Kraftfahrzeug, mit einem ersten Flüssigkeitskreislauf und einem zweiten Flüssigkeitskreislauf, und mit einer Ventileinrichtung (1), die sowohl dem ersten Flüssigkeitskreislauf als auch dem zweiten Flüssigkeitskreislauf zugeordnet ist, **gekennzeichnet durch** die Ausbildung der Ventileinrichtung (1) nach einem der Ansprüche 1 bis 14.

## Claims

1. A valve device (1) with a housing (2) comprising a first connection port (3) and a second connection port (4) for a first liquid circuit, and a third connection port (5) and a fourth connection port (6) for a second liquid circuit, wherein the first connection port (3) is permanently fluidically connected to the second connection port (4), and with a valve unit (8) comprising a movably mounted valve element (16) with which a thermally activatable spring element (40) is associated and which opens a connection between the third connection port (5) and the fourth connection port (6) in a first end position and cuts off the connection in a second end position, **characterized in that** the thermally activatable spring element (40) is arranged in a chamber (15) located between the first connection port (3) and the second connection port (4), which is permanently cut off from the third and the fourth connection port (5, 6) and which preloads the valve element (16) in the direction of the second end position, and **in that** the valve unit (8) is designed as a slide-in module which can be slid into the housing (7) and which comprises a cylindrical module housing (9) comprising a bottom (10) with an opening (12) at one end, the bottom (10) delimiting the chamber (15), wherein the valve element (16) is slidably mounted in the module housing (9) and passed with means of a free end (17) in a radially sealing/tight manner through the opening (12).

2. Valve device according to claim 1, **characterized in that** a return spring (41) on the valve element (16) counteracts the thermally activatable spring element (40).

3. Valve device according to any one of the preceding claims, **characterized in that** the free end (17) of the valve element (16) supports a sealing body (26), which is designed to cooperate in the second end position with a valve seat (27) of the housing (7), so that the connection is cut off.

4. Valve device according to any one of the preceding claims, **characterized in that** the valve element (16) comprises at least one radial projection (38) in the area of the chamber (15), and that the spring elements (40, 41) are axially supported on the radial projection (38).

5. Valve device according to any one of the preceding claims, **characterized in that** at least two openings (13, 14) formed in a shell wall (11) of the module housing (9) are associated with the chamber (15), wherein one of the openings (13) is/can be associated with the first connection port (3) and the other of the openings (14) is/can be associated with the second connection port (4).

6. Valve device according to any one of the preceding claims, **characterized in that** the module housing (9) and the housing (2) comprise at least one positive locking anti-rotation means (35).

7. Valve device according to claim 4, **characterized in that** the radial projection (38) is formed by a support sleeve (36) which is pushed onto the valve element (16) and which is held axially by positive and/or frictional locking on the valve element (16).

8. Valve device according to claim 7, **characterized in that** the support sleeve (36) comprises at least one radially inward protruding support projection (37) which engages in a radial recess (39) of the valve element (16).

9. Valve device according to any one of the preceding claims, **characterized in that** the shell wall (11) of the module housing (9) comprises at least one slit-shaped recess (31), and that a holding element (30) having an opening (32) is plugged laterally through the slit-shaped recess (31) into the module housing (9).

10. Valve device according to claims 2 and 9, **characterized in that** the return spring (41) is axially supported on the holding element (30).

11. Valve device according to any one of claims 9 and 10, **characterized in that**, between the holding element (30) and the bottom (10), a resiliently deformable sealing element (25) is arranged, which is in contact radially with the valve element (16) in a sealing/tight manner.

12. Valve device according to any one of the preceding claims, **characterized in that**, in the housing (2), the third connection port (5) lies in the movement direction of the valve element (16) and the fourth connection port (6) lies perpendicularly thereto.

13. Valve device according to claim 11, **characterized in that** the sealing element (25) is a sealing ring.

14. Valve device according to any one of claims 11 to 13, **characterized in that** the sealing element (25) is held at the valve element (16) in a preloaded manner.

15. A cooling water system for a motor vehicle, with a first liquid circuit and a second liquid circuit, and with a valve device (1) which is associated both with the first liquid circuit and also with the second liquid circuit, **characterized by** the configuration of the valve device (1) according to any one of claims 1 to 14.

## Revendications

1. Dispositif de soupape (1), avec un boîtier (2), qui présente un premier raccord (3) et un deuxième raccord (4) pour un premier circuit de liquide et un troisième raccord (5) et un quatrième raccord (6) pour un deuxième circuit de liquide, dans lequel le premier raccord (3) est relié fluidiquement en permanence au deuxième raccord (4), et avec une unité de soupape (8), qui présente un élément de soupape (16) monté de manière mobile, auquel est associé un élément de ressort (40) pouvant être activé thermiquement et qui libère dans une première position finale une liaison entre le troisième raccord (5) et le quatrième raccord (6) et la ferme dans une deuxième position finale, **caractérisé en ce que** l'élément de ressort (40) pouvant être activé thermiquement est disposé dans une chambre (15) montée entre le premier raccord (3) et le deuxième raccord (4), qui est séparée en permanence du troisième et du quatrième raccord (5, 6) et précontraint l'élément de soupape (16) en direction de la deuxième position finale, et que l'unité de soupape (8) est réalisée sous la forme d'un module d'insertion par glissement pouvant être enfiché dans le boîtier (7) et présente un boîtier de module (9) de forme cylindrique, qui présente du côté d'une extrémité un fond (10), délimitant la chambre (15), avec une ouverture (12), dans lequel l'élément de soupape (16) est monté de manière à pouvoir être coulissé dans le boîtier de module (9) et est guidé par une extrémité (17) libre de manière à assurer l'étanchéité/de manière étanche radialement à travers l'ouverture (12).

2. Dispositif de soupape selon la revendication 1, **caractérisé en ce qu'**un ressort de rappel (41) au niveau de l'élément de soupape (16) contrecarre l'élément de ressort (40) pouvant être activé thermiquement.

3. Dispositif de soupape selon l'une quelconque des revendications précédentes, **caractérisé en ce que** l'élément de soupape (16) supporte au niveau de son extrémité (17) libre un corps étanche (26), qui est réalisé pour coopérer dans la deuxième position finale avec un siège de soupape (27) du boîtier (7) de sorte que la liaison est coupée.

4. Dispositif de soupape selon l'une quelconque des revendications précédentes, **caractérisé en ce que** l'élément de soupape (16) présente au moins une partie faisant saillie radiale (38) dans la zone de la chambre (15), et que les éléments de ressort (40, 41) se soutiennent axialement au niveau de la partie faisant saillie radiale (38).

5. Dispositif de soupape selon l'une quelconque des revendications précédentes, **caractérisé en ce qu'**au moins deux ouvertures (13, 14) réalisées dans une paroi extérieure (11) du boîtier de module (9) sont associées à la chambre (15), dans lequel une des ouvertures (13) est associée ou peut être associée au premier raccord (3) et l'autre des ouvertures (14) est associée/peut être associée au deuxième raccord (4).

6. Dispositif de soupape selon l'une quelconque des revendications précédentes, **caractérisé en ce que** le boîtier de module (9) et le boîtier (2) présentent au moins un système anti-torsion (35) à complémentarité de forme.

7. Dispositif de soupape selon la revendication 4, **caractérisé en ce que** la partie faisant saillie radiale (38) est formée par un manchon de support (36) appliqué par glissement sur l'élément de soupape (16), qui est maintenue par complémentarité de forme et/ou à force axialement sur l'élément de soupape (16).

8. Dispositif de soupape selon la revendication 7, **caractérisé en ce que** le manchon de support (36) présente au moins une partie faisant saillie de support (37) faisant saillie radialement vers l'intérieur, qui vient en prise avec un renfoncement radial (39) de l'élément de soupape (16).

9. Dispositif de soupape selon l'une quelconque des revendications précédentes, **caractérisé en ce que** le boîtier de module (9) présente au moins un évidement (31) en forme de fente dans sa paroi extérieure (11), et qu'un élément de maintien (30) présentant une ouverture (32) est enfiché latéralement dans le boîtier de module (9) par l'évidement (31) en forme de fente.

10. Dispositif de soupape selon les revendications 2 et 9, **caractérisé en ce que** le ressort de rappel (41) est soutenu axialement au niveau de l'élément de maintien (30).

11. Dispositif de soupape selon l'une quelconque des revendications 9 et 10, **caractérisé en ce qu'**un élément d'étanchéité (25) élastiquement déformable, qui repose de manière à assurer l'étanchéité/de manière étanche radialement au niveau de l'élément de soupape (16), est disposé entre l'élément de maintien (30) et le fond (10).

12. Dispositif de soupape selon l'une quelconque des revendications précédentes, **caractérisé en ce que** le troisième raccord (5) se situe dans la direction de déplacement de l'élément de soupape (16) dans le boîtier (2), et le quatrième raccord (6) est perpendiculaire à celui-ci.

13. Dispositif de soupape selon la revendication 11, **caractérisé en ce que** l'élément d'étanchéité (25) est une bague d'étanchéité.

14. Dispositif de soupape selon l'une quelconque des revendications 11 à 13, **caractérisé en ce que** l'élément d'étanchéité (25) est maintenu de manière précontrainte au niveau de l'élément de soupape (16).

15. Système d'eau de refroidissement pour un véhicule automobile, avec un premier circuit de liquide et un deuxième circuit de liquide, et avec un dispositif de soupape (1), qui est associé à la fois au premier circuit de liquide et au deuxième circuit de liquide, **caractérisé par** la réalisation du dispositif de soupape (1) selon l'une quelconque des revendications 1 à 14.
